# EUROPEAN PATENT SPECIFICATION

(11) **EP 0 995 016 B1**
(45) Date of publication and mention of the grant of the patent: **23.02.2005**
(21) Application number: 97934061.9
(22) Date of filing: 07.07.1997
(51) Int. Cl.: F01M 1/06, F01M 11/06, F01M 13/04

(54) **MULTI-POSITION OPERABLE FOUR-CYCLE ENGINE**
IN MEHREREN POSITIONEN ARBEITENDER 4-TAKT MOTOR
MOTEUR A QUATRE TEMPS FONCTIONNANT EN PLUSIEURS POSITIONS

(43) Date of publication of application: 26.04.2000
(73) Proprietor: MTD PRODUCTS, INC., Valley City, OH 44280 (US)
(72) Inventor: KURIHARA, Katsumi, Nagoya-shi, Aichi-ken 464 (JP); KAWAMOTO, Shiro, Chandler, AZ 85226 (US); GRAYSON, James, M., Wonder Lake, IL 60097 (US)
(74) Representative: Bucks, Teresa Anne
(86) International application number: PCT/US1997/011848
(87) International publication number: WO 1999/002824

(56) References cited:
- US-A- 5 025 762
- US-A- 5 149 287
- US-A- 5 167 207
- US-A- 5 213 074
- US-A- 5 241 932
- US-A- 5 447 127
- US-A- 5 558 549

## Description

### Technical Field

This invention relates to a four-cycle engines and more particularly to small operator carried four-cycle engines having a crankcase vent for preventing oil loss.

### Background Art

Operator carried power tools such as line trimmers, blower/vacuums, chain saws and the like are typically powered by two-cycle internal combustion engines or electric motors. Two-cycle engines have well recognized exhaust emission problems. Until relatively recently, it was believed that four-cycle engines were too heavy and could not be operated through the range of orientations necessary for an operator carried power tool. The present applicant, however, recently introduced a commercially successful four-cycle engine powered line trimmer illustrated in U.S. Patents 5,241,932 and 5,421,292 which are incorporated by reference herein.

The Everts '932 patent describes a number of alternative techniques for lubricating the overhead valves and rocker arms oriented in the valve chamber. A sealed lubricant system is described as a number of alternative mist lubrication systems. The mist lubrication systems enable the engine to be inclined very significantly from the vertical orientation, however, when the engine is run in the inverted position for extended periods of time, oil begins to leak from the engine breather.

It is an object of the present invention to increase the length of time an operator carried four-cycle engine can be run in the inverted position before oil begins to leak from the engine breather.

It is a further object of the present invention to provide a simple and easy to manufacture engine components to block the flow of oil form the crankcase.

These objects and other features and advantages of the present invention will become apparent upon further review of the specification and the drawings.

### Disclosure of the Invention

According to one aspect of the invention, there is provided an engine as set out at claim 1.

According to another aspect of the invention, there is provided an engine as set out at claim 10.

According to other aspects of the invention, there are provided operator carried power tools as set out at claims 8 and 12.

In one embodiment, there is provided an operator carried motor drive power tool and a lightweight four-cycle internal combustion engine for driving a rotary driven implement. The four cycle engine is mounted to the frame to be carried by the operator in a normal operating position. The four-cycle engine includes a lightweight block defined as a cylindrical bore crankcase, enclosed cam case and a bearing including a conventional piston and connecting rod, reciprocating within the cylindrical bore to cooperate with a crank pin of the crankshaft. The crankshaft is provided with an axial shaft pivotally mounted on the engine block having an internal axial passageway formed therein with two axial spaced apart inlet/outlet ports, a crankshaft. web-counterweight affixed to the axial shaft and the crank pin. The web-counterweight has an internal radially extending passageway in communication with one of the inlet outlet ports of the axial shaft. The second inlet/outlet port of the axial shaft is in communication with the cam case to thereby interconnect the cam case and the crankcase via the crankshaft passageway. When the engine is in operation, the rotating passageway precludes the flow of free oil and large oil droplets from the crankcase to the cam case while allowing oil mist laden air to pass freely therebetween.

### Brief Description of the Drawings

Figure 1 is a perspective view illustrating a line trimmer of the present invention;
Figure 2 is a cross-sectional side elevation of the engine of the present invention;
Figure 3 is an enlarged partially cutaway side elevational view of the crankshaft of the present invention;
Figure 4 is an axial end view of the crankshaft taken along the line 4.4 of Figure 3.
Figure 5 is a cross-sectional side elevation of an engine illustrating a second embodiment of the invention;
Figure 6 is a cross-sectional side elevation of an engine illustrating a third embodiment; and
Figure 7 is an enlarged cross-sectional view of the cam shaft utilized in the third engine embodiment of Figure 6.

### Best Modes for Carrying out the Invention

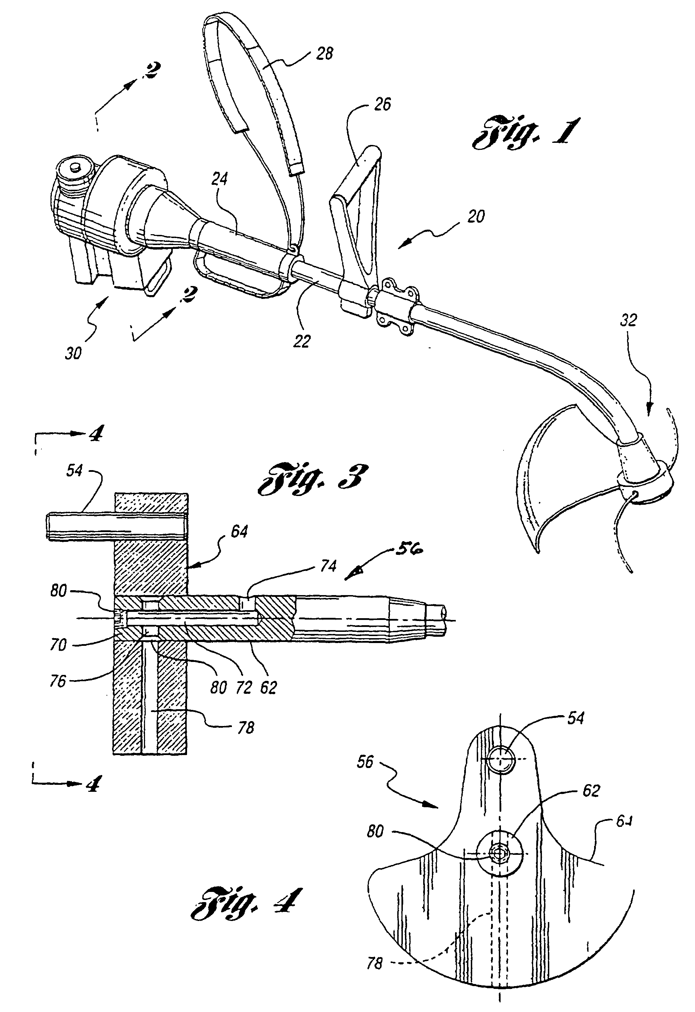

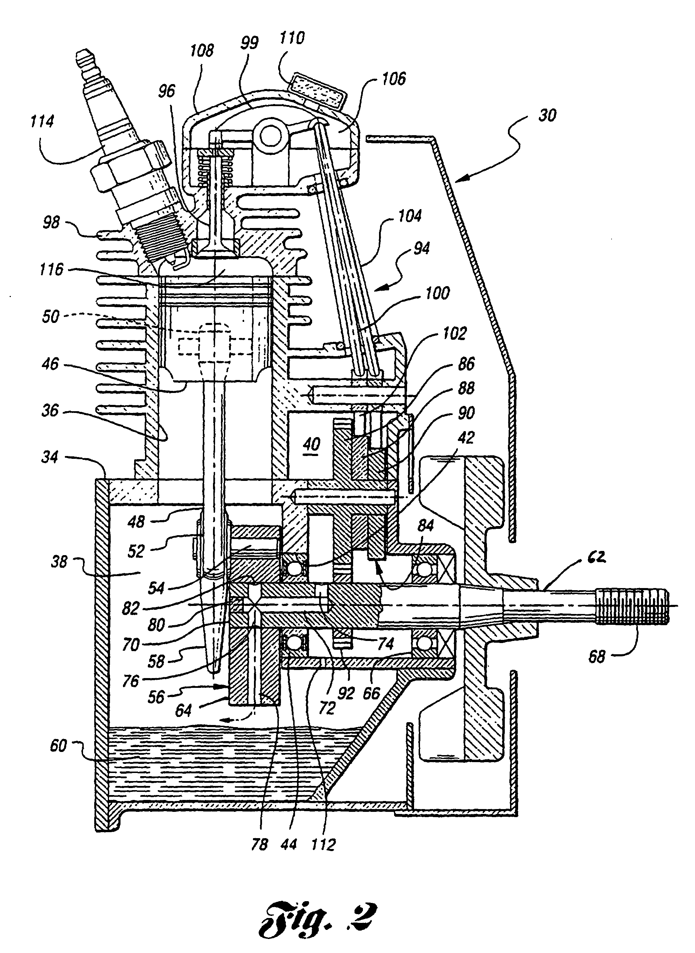

Figure 1 illustrates a line trimmer 20 made in accordance with the present invention. Line trimmer 20 is used for illustration purposes and it should be appreciated that other hand held power tools carried by operators such as chain saws or a blower vacuum can be made in a similar fashion. Line trimmer 20 has a frame 22 which is provided by an elongated aluminum tube. Frame 22 has a pair of handles 24 and 26 to be grasped by the operator during normal use. Strap 28 is placed over the shoulder of the user in a conventional manner in order to more conveniently carry the weight of the line trimmer during use. Attached to one end of the frame generally behind the operator is a four-cycle engine 30. The engine drives a conventional flexible shaft which extends through the center of the tubular frame to drive an implement 32 having a rotary cutting head or the like affixed to the opposite end of the frame. It should be appreciated that in the case of a chain saw or a blower/vacuum, the implement would be a cutting chain or a rotary impeller, respectively.

Figure 2 illustrates a cross-sectional side view four-cycle engine 30. Four-cycle engine 30 is made up of a lightweight aluminum engine block 34 having a cylindrical bore 36 formed therein. Engine block 34 defines two internal substantially closed cavities, crankcase 38 and cam case 40. Engine block 34 also defines a bearing journal surface 42 sized to receive an annular bearing such as a sealed roller ball-bearing 44 illustrated in the present embodiment. It should be noted, however, that other types of sealed bearings such as a lead alloy babbitt bearing could be used, however, a sealed roller ball-bearing is preferred. Piston 46 and connecting rod 48 form a piston connecting rod assembly which reciprocates within cylindrical bore 36 in a conventional manner. Connecting rod 48 is provided with a bearing 50 shown in phantom outline, which pivotally cooperates piston 46 and a bearing 52 which pivotally cooperates with crankpin 54 of crankshaft 56. In the embodiment illustrated, connecting rod 48 is provided with a splasher 58 which intermittently engages oil 60 in the lower region of crankcase 38.

Crankshaft 56 in the preferred embodiment illustrated is made up of three main components; crankpin 54, axial shaft 62 and web-counterweight 64. The web-counterweight 64 is affixed to the axial shaft 62 and crank pin 54 to maintain the crankpin spaced radially apart and parallel to the axis of axial shaft 62. In the embodiment illustrated, crankshaft 56 is of a cantilevered crank design and fabricated from three separate components. It should be appreciated of course that a crankshaft can be formed of a unitary forging as would be the case of a convention U-shaped crankshaft in which the axial shaft would be made up of two portions, one on each side of the crankpin and a pair of web-counterweights would be provided in order to support the crankpin on both sides of the connecting rod 48. The present technology is equally applicable to a non-cantilevered crank U-shaped design fabricated or unitary construction.

Axial shaft 62 of crankshaft 56 is generally elongated and is pivotally mounted upon engine bearing 44 and a second axially spaced apart engine bearing 66. Axial shaft 62 has an output end 68 and an input end 70. An axial passage 72 extends through a portion of the axial shaft adjacent input end 70. The axial passage connects to two axial spaced apart inlet/outlet ports 74 and 76. Inlet/outlet port 74 is positioned in a region of axial shaft 62 which falls within the cam case 40. Inlet/outlet port 76 falls within a region of axial shaft 62 within crankcase 38. Inlet/outlet port 76 communicates with a radial passageway 78 formed within web-counterweight 64 to form a continuous passageway connecting the crankcase 38 to cam case 40 via radial passageway 78, inlet/outlet port 76, axial passage 72 and inlet/outlet path 74.

To facilitate fabrication, axial passageway 72 is formed by drilling a hole in the first end 70 of axial shaft 62 and subsequently plugging the end of the hole using a plug 80. Inlet/outlet ports 74 and 76 formed by radially drilling holes in axial shaft 62. For convenience in aligning inlet/outlet port 76 with radial passageway 78 in the web-counterweight inlet/outlet port 76 is preferably a through-hole cross drilled through axial shaft 62 which intersects a circumferentially extending groove 82 aligned with inlet/outlet port 76 and radial port 78 so that rotational alignment of axial shaft 62 and web-counterweight 64 is not critical.

In operation, splasher 58 will intermittently strike the oil 60 within the crankcase so that air filling the remainder of crankcase 38 will be laden with a fine oil mist. As the piston reciprocates within the bore of the crankcase the volume accordingly changes there is a sinusoidal fluctuation in crankcase pressure. This pressure fluctuation causes oil mist laden air to pulse into and out of the passageway extending through crankshaft 56 carrying a fine oil mist into the cam case 40. This oil mist serves to lubricate camshaft assembly 84 which is made up of a cam drive gear 86 and intake and exhaust cams 88 and 90, respectively. Cam gear 86 is driven by crank gear 92 affixed to axial shaft 62, which rotates the camshaft assembly 84 at one-half of crankshaft speed. A valve train 94 operatively connects the camshaft 84 to intake valve 96 and exhaust valve (not shown) located in cylinder head 98. Valve train 94 is an overhead valve rocker arm type design which utilizes a pair of pivotal rocker arm 99 which pivotally connects to the cylinder head 98 to cooperate with a cam lobe and one of the valves via a push rod 100 and a cam follower 102.

It should be appreciated that various cam, cam follower and push rod designs can be utilized practicing the present invention as shown in the Everts '932 and the Hoffman '292 patents incorporated herein. For example, the preferred embodiment shown in Figure 2 utilizes a pair of pivotable frog-leg type cam followers 102, however, conventional tappet-type followers could be alternatively employed.

Push rods 100 are oriented in a pair of push rod tubes 104 which cooperate with engine block 34 and cylinder head 98. Push rod tubes 104 surround push rods 100 and interconnect cam case 40 where valve chamber 106 allowing oil mist laden air to pass therebetween. Cylinder head 98 is provided with a rocker cover 108 which defines valve chamber 106 therebetween. A breather 110 is affixed to the rocker cover in order to allow air to pass between valve chamber 106 and the atmosphere. Preferably, breather 110 is filled with a fibrous material to entrap oil and to prevent oil escape. Breather 110 enables the pressure in valve chamber 106 to closely approximate atmospheric pressure resulting in the flow of oil mist laden air from the crankcase to the valve chamber 106 via cam case 40 as the pressure within the crankcase varies above and below atmospheric pressure as the piston reciprocates.

The oil laden mist circulating through the cam case 40 and valve chamber 106 will lubricate the moving parts contained therein as the mist condenses on the part surfaces. Mist condensate will form oil droplets which will, via gravity feed, gradually flow back down the push rod tubes 104 into the cam case 40. In order to facilitate the return of oil from the cam case to the crankcase, a small orifice 112 is formed in the lower wall of the engine block to facilitate oil return. It should be appreciated that the effective diameter of orifice 112 must be substantially smaller than the effective diameter of the passageway extending to the crankshaft. Orifice 112 is ideally sized so it is just large enough to enable oil condensate to drip back into the crankcase at the rate which the condensate is formed. Having an orifice larger than necessary would enable oil to leak into the valve case in the event the crankshaft axis is aligned vertically with the crankshaft output end oriented downward.

While it should be appreciated that an engine of the present invention could not run indefinitely in the inverted position as eventually the oil mist would transfer oil from the crankcase to the valve chamber in sufficient quantities to cause leakage, the present invention can substantially increase the length of time an engine utilizing a mist lubrication system can be run in the inverted or inclined state. The design also significantly increasing the range of angular orientations that the engine may be run at in a continuous manner.

Figures 3 and 4 show a crankshaft in greater detail. It should be appreciated that the crankshaft and the passageway formed therethrough is the principal difference between the present invention and the power tool and engine therefor illustrated in the Everts '932 patent. The components of the engine which are not necessarily directly related to the improvement in a mist lubrication system and have not been described in detail. The general operation of the engine and the description of conventional engine components such as sparkplug 114 and combustion chamber 116 and other components, such as balance of the intake and exhaust system namely intake ports, exhaust ports, carburetor and muffler, are illustrated in the Everts' 932 patent.

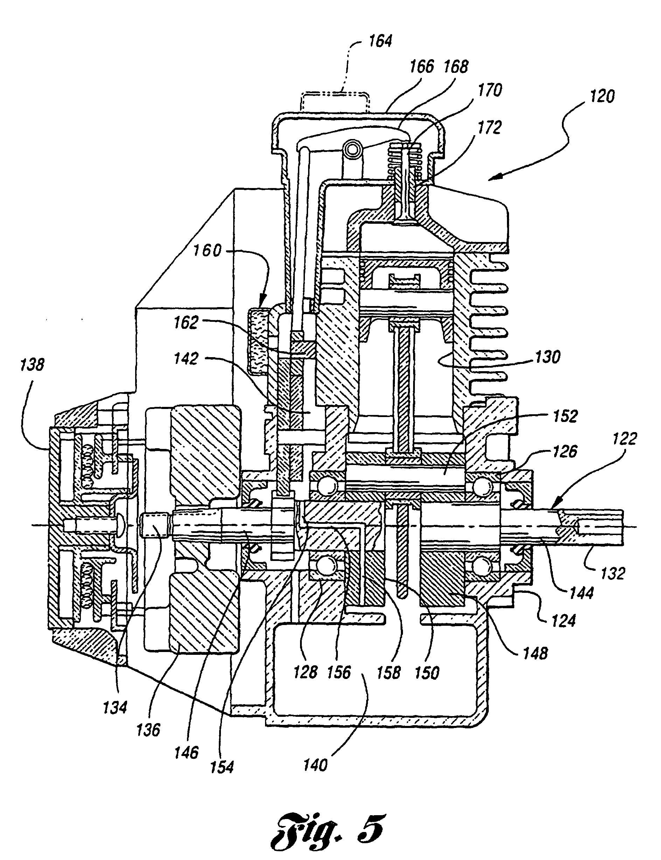

Figure 5 is an alternative second engine .embodiment 120 illustrating an alternative crankshaft construction. Second engine embodiment 120 has a generally U-shaped double ended crankshaft 122 which is pivotally supported relative to engine block 124 by a pair of bearings 126 and 128 oriented on opposite sides of cylinder bore 130. Crankshaft 122 is provided with an output end portion 132 for attachment to a rotary tool or the like and a free end portion 134 which is attached to fly wheel 136 and recoil starter 138.

Crankshaft 122 is provided with an internal passageway to accommodate the flow of mist-ladened air between crankcase 140 and camcase 142 as generally described with reference to the four-cycle engine 30 of Figures 2-4. Crankshaft 122 is made up of five subcomponents in the embodiment illustrated which are pressed together; axially aligned spaced apart output shaft 144 and accessory shaft 146, first web counterweight 148, second web counterweight 150 and crankpin 152. Second web counterweight 150 is provided with a radial passageway 154 and accessory shaft 146 is provided with a generally "Z" shaped passageway 156 which in cooperation with the radial passageway 154 to collectively define a passageway 158 interconnecting crankcase 140 in camcase 142. Passageway 154 is provided with an inlet/outlet port in communication with the crankcase and an inlet/outlet port in communication with camcase as illustrated in Figure 5 and as described with reference with the first four cycle embodiment 30.

During an engine operation, the pressure within crankcase 140 will fluctuate generally sinusoidally. The pressure differential between the crankcase and the camcase will cause air ladened with a fine oil mist to flow into and out of the crankcase of passageway 158. Fine oil mist droplets will be able to flow into the camcase, however, free oil and large droplets will be precluded from flowing through passageway 158 as a result of the centrifugal force caused by the rotating radial passageway 154.

Camcase 142 is vented to atmosphere via a breather. The breather preferably includes a fine fibrous material to trap oil and prevent oil from being discharged from the engine. With reference to Figure 5, the breather can be placed at one or two locations. Breather 160 is shown affixed to the engine block in the proximity of cam follower 162. Alternatively, breather 164 can be located on rocker cover 166.

It should be appreciated that locating the breather on the rocker cover causes more mist ladened oil to flow to the rocker arms 168 and valves 170 located in the cylinder head. Locating the breather on the side of the engine will reduce oil flow to the rocker arms and valves relative to the location of breather 164. Which of the two locations selected is a matter of design choice and the amount of oil experimentally determined to be necessary to lubricate the valves and rockers without having excessive oil consumption resulting from oil flowing past valve 170 and valve stem insert 172.

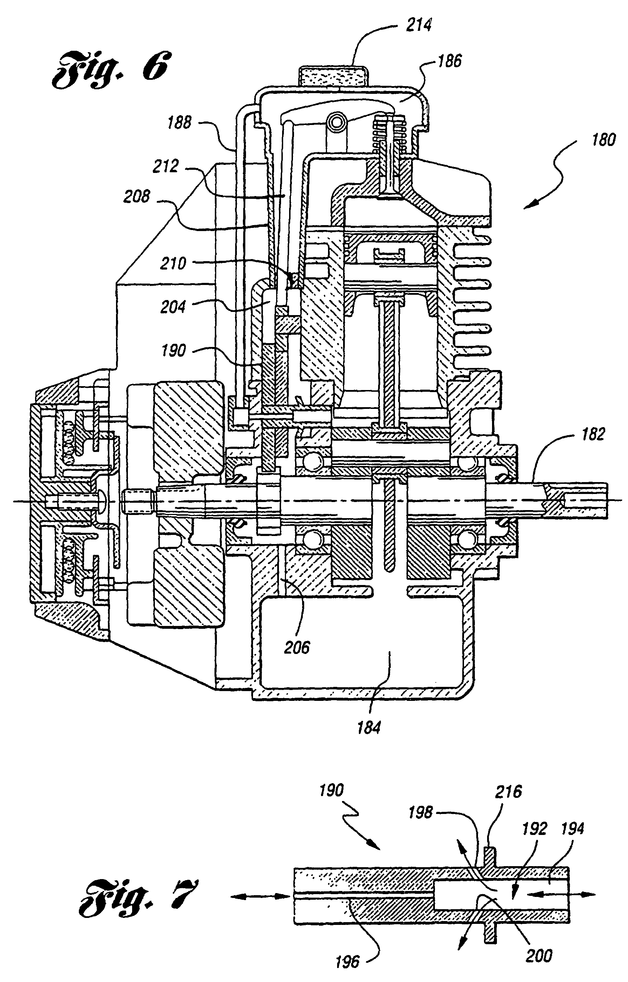

Figure 6 illustrates a third engine embodiment 180. Engine 180 has a generally U-shaped double-ended crankshaft 182 of the same general configuration as crankshaft 122 of the second engine embodiment 120, however, there is no air and mist passageway formed in crankshaft 182. Crankcase 184 is connected to valve chamber 186 via passageway 188 formed by an external tube and internal passageway extending through camshaft 190.

The camshaft 190 is shown in enlarged cross-sectional elevational view in Figure 7. The camshaft 190 has a stepped hole 192 extending axially therethrough. The stepped hole 192 has a large diameter region 194 adjacent the end of camshaft 190 in communication with crankcase 184. The opposite end of camshaft 190 is provided with a small diameter hole 196 in communication with passageway 188 which serves to interconnect crankcase 184 and valve chamber 186.

During engine operation, an air ladened mist flows into and out of the axial passageway 192 extending through cam shaft 190. Fine mist droplets pass freely through. Larger oil droplets will be spun by centrifugal force to the outer wall of large diameter passageway section 194 and will be expelled via ports 198 and 200 into camcase 204 where the oil will flow back to crankcase 184 by passing through oil return port 206.

It should be appreciated that valve chamber 186 is connected to cam chamber 204 via push rod tubes 208. A seal 210 extending about push rod 212 substantially isolates valve chamber 186 from cam chamber 204. Oil mist ladened air flowing through hollow cam shaft 190 and passageway 188 will ultimately end up in valve chamber 186 as a result of the location of breather 214. The oil which lubricates the valve train components will flow via gravity down push rod tube 208 leaking past seal 210 back into the camcase 204 and ultimately to crankcase 184.

An oil shedder 216 is preferably formed about the periphery of camshaft 190 proximate ports 198 and 200. Shedder 216 when rotating serves to prevent oil from flowing back into ports 198 and 200 in the event that camcase 204 becomes flooded with oil when the engine is tipped up on end for an extended period of time. Shedder 216 is optional of course and is not necessary in all applications.

It should be understood, of course, that while the invention herein shown and described constitutes a preferred embodiment of the invention, it is not intended to illustrate all possible variations thereof. Alternative structures may be created by one of ordinary skill in the art without departing from the spirit and scope of the invention described in the following claims.

## Claims

1. A lightweight four-cycle internal combustion engine comprising:
a lightweight engine block forming a cylindrical bore, an enclosed crank case in communication with the cylindrical bore, an enclosed cam case and a bearing journal extending between the crank case and the cam case;
a piston reciprocally cooperating within a cylindrical bore;
a connecting rod assembly having a first bearing for pivotally cooperating with the piston, an elongated central region and a second bearing spaced from the first bearing;
a cylinder head assembly attached to the engine block to define a combustion chamber in cooperation with the cylinder bore and the piston, said cylinder head assembly having an overhead intake and exhaust ports, a spark plug hole extending into the combustion chamber and an intake valve, an exhaust valve and a spark plug respectively cooperating with the intake and exhaust ports and spark plug hole;
a cam shaft driven by the crankshaft at ½ engine speed for sequentially activating the intake and exhaust valves;
a valve cover attached to the cylinder head to define a valve chamber;
a crankshaft having a crank pin cooperating with the connecting rod second bearing, an elongated axial shaft pivotally mounted upon the engine block bearing journal and provided with a driven end, an output end, an internal axial passageway having two axial spaced apart inlet/outlet ports, a web-counterweight cooperating with the crank pin and the axial shaft maintaining the crank pin and axial shaft in spaced apart parallel relation, the web-counterweight having a radially extended internal passageway having a first end in communication with one of the inlet/outlet ports of the axial shaft and a second end in communication with the crank case, the other of the inlet/outlet ports of the axial shaft in communication with the cam case to thereby interconnect the cam case and crank case;
wherein an oil mist formed by lubricating oil which partially fills the crank case is free to pass through the passageway in the crank shaft during operation of the engine; and,
wherein large oil droplets and liquid oil are precluded from entering the rotating radially passageway in the crank shaft web-counterweight due to the centrifugal force of the rotating passageway thereby permitting the engine to be operable in a number of orientations.

2. The engine of claim 1 wherein the crankshaft is generally U-shaped having two coaxially aligned spaced apart axial shaft portions and two associated web-counterweight portions interconnected by the crankpin, one of the axial shaft portions and associated with web-counterweight portion having internal passageway formed therein.

3. The engine of claim 2 further comprising a mist lubricant passageway extending between the cam case and the valve cover which is at least partially formed by the engine block.

4. The engine of claim 3 wherein said engine block is provided with an oil return port extending between the cam case and the crank case to enable oil condensate forming in the valve chamber and cam case to return to the crank case via gravity feed when the engine is being operated in a normal generally vertical position, the oil return port being substantially larger and effective area than the passageway extending throughout crank shaft.

5. The engine of claim 4 further comprising a breather vent connected to the atmosphere which is isolated from the crankcase by passageway extending through the crankshaft.

6. The engine of claim 5 wherein the breather vent is affixed to the valve cover interconnecting the valve chamber with the atmosphere.

7. The engine of claim 5 wherein the breather vent is affixed to the engine block and in communication with the cam case.

8. An operator carried power tool comprising the engine of claim 6.

9. An operator carried power tool according to claim 8 wherein the power tool consists of a line trimmer.

10. A lightweight four-cycle internal combustion engine comprising:
a lightweight engine block forming a cylindrical bore and an enclosed crankcase;
a piston reciprocally cooperating within a cylindrical bore;
a connecting rod assembly having a first bearing pivotally cooperating with the piston, an elongated central region and a second bearing spaced from the first bearing;
a crankshaft having an elongated axial shaft rotatably mounted in the engine block and a radially offset crankpin in cooperation with the connecting rod second bearing;
a cylinder head assembly attached to the engine block to define a combustion chamber in cooperation with the cylinder bore and the piston, said cylinder head assembly having overhead intake and exhaust ports, a spark plug hole extending into the combustion chamber and an intake valve, an exhaust valve and a spark plug respectively cooperating with the intake and exhaust ports and spark plug hole;
a valve cover attached to the cylinder head to define a valve chamber; and
a cam shaft including cams for sequentially activating the intake and exhaust valves, a cam shaft drive means drivably connecting said crankshaft and said cam shaft for driving said cam shaft at 1/2 engine speed, the cam shaft having an axial passageway extending therethrough provided with at least one rotary radial port;
wherein said radial port of the cam shaft axial passageway is in communication with the crankcase and the axial passageway in the cam shaft is in communication with the valve chamber through a mist lubrication passageway;
wherein the mist lubrication passageway is formed at least in part by an external tube extending from the valve chamber to a region of the engine block immediately adjacent the axial passageway formed in the camshaft;
wherein the air which partially fills the crankcase is free to pass through the rotating cam shaft as large oil droplets are precluded from passing through the axial passageway in the cam shaft due to centrifugal force of the rotating camshaft, resulting in an engine which is operable in a number of orientations.

11. The engine of claim 10 wherein said engine block is provided with an oil return port extending between the cam case and the crank case to enable oil condensate forming in the valve chamber and cam case to return to the crank case via gravity feed when the engine is being operated in a normal generally vertical position,

12. An operator carried power tool, comprising the engine of claim 10.

13. An operator carried power tool according to claim 12 wherein the power tool consists of a line trimmer.

## Patentansprüche

1. Viertaktverbrennungsmotor in Leichtbauweise, der umfasst:
einen Motorblock in Leichtbauweise, der eine Zylinderbohrung ausbildet; ein geschlossenes Kurbelgehäuse, das mit der Zylinderbohrung in Verbindung steht; ein geschlossenes Nockengehäuse und einen Lagerzapfen, der sich zwischen dem Kurbelgehäuse und dem Nockengehäuse erstreckt;
einen Kolben, der sich hin- und herbewegend mit der Zylinderbohrung zusammenwirkt;
eine Kolbenstangen-Baugruppe mit einem ersten Lager für drehgelenkiges Zusammenwirken mit dem Kolben, einem gestreckten zentralen Bereich und einem zweiten Lager, das von dem ersten Lager beabstandet ist;
eine Zylinderkopf Baugruppe, die an dem Motorblock angebracht ist, um in Zusammenwirken mit der Zylinderbohrung und dem Kolben eine Verbrennungskammer auszubilden, wobei die Zylinderkopf-Baugruppe einen obenliegenden Einlasskanal und Auslasskanal, eine Zündkerzenbohrung, die sich in die Verbrennungskammer hinein erstreckt, und ein Einlassventil, ein Auslassventil und eine Zündkerze hat, die jeweils mit dem Einlasskanal und dem Auslasskanal und der Zündkerzenbohrung zusammenwirken;
eine Nockenwelle, die durch die Kurbelwelle bei halber Motordrehzahl angetrieben wird, um das Einlassventil und das Auslassventil aufeinanderfolgend zu aktivieren;
eine Ventilabdeckung, die an dem Zylinderkopf angebracht ist, um eine Ventilkammer auszubilden;
eine Kurbelwelle mit einer Kurbelkröpfung, die mit dem zweiten Lager der Kurbelstange zusammenwirkt, eine gestreckte Achsenwelle, die drehgelenkig an dem Lagerzapfen des Motorblockes angebracht ist und mit einer angetriebenen Seite, einer Antriebsseite, einem Innen-Achsendurchgang mit zwei axial beabstandeten Einlass-/Auslasskanälen, einem Steg-Gegengewicht, das mit der Kurbelkröpfung und der Achsenwelle zusammenwirkt und dabei die Kurbelkröpfung und die Achsenwelle in einer parallel beabstandeten Beziehung aufrechterhält, wobei das Steg-Gegengewicht einen sich radial erstreckenden Innendurchgang mit einem ersten Ende in Verbindung mit einem der Einlass-/Auslasskanäle der Achsenwelle und mit einem zweiten Ende in Verbindung mit dem Nockengehäuse hat, wodurch das Nockengehäuse und das Kurbelgehäuse miteinander verbunden werden;
wobei ein Ölnebel, der von Schmieröl ausgebildet wird, das das Kurbelgehäuse teilweise ausfüllt, sich während der Motor in Betrieb ist frei durch den Durchgang in der Kurbelwelle hindurch bewegen kann; und
wobei große Öitropfen und flüssiges Öl aufgrund der Zentrifugalkraft des sich drehenden Durchganges daran gehindert werden, in den sich in radialer Richtung drehenden Durchgang einzutreten, wodurch ermöglicht wird, dass der Motor in mehreren Ausrichtungen betrieben werden kann.

2. Motor nachAnspruch1, wobei die Kurbelwelle allgemein U-förmig ist und zwei koaxial ausgerichtete voneinander beabstandete Achsenwellen-Abschnitte und zwei zugehörige Steg-Gegengewicht-Abschnitte hat, die durch die Kurbelkröpfung miteinander verbunden werden, wobei einer der Achsenwellen-Abschnitte, der zu einem Steg-Gegengewicht-Abschnitt zugehörig ist, einen darin ausgebildeten Innendurchgang aufweist.

3. Motor nach Anspruch 2, der weiterhin einen Ölnebel-Schmiermittel-Durchgang hat, der sich zwischen dem Nockengehäuse und der Ventilabdeckung erstreckt, die wenigstens teilweise durch den Motorblock ausgebildet wird.

4. Motor nach Anspruch 3, wobei der Motorblock mit einem Ölrücklaufkanal versehen ist, der sich zwischen dem Nockengehäuse und dem Kurbelgehäuse erstreckt, sodass sich in der Ventilkammer und dem Nockengehäuse bildendes Ölkondensat durch Schwerkraft in das Kurbelgehäuse zurücklaufen kann, wenn der Motor in einer normalen, im allgemeinen vertikalen, Position betrieben wird, wobei der Ölrücklaufkanal im Wesentlichen eine größere wirksame Fläche hat als der Durchgang, der sich durch die gesamte Kurbelwelle erstreckt.

5. Motor nach Anspruch 4, der weiterhin eine Entlüftungsöffnung hat, die mit der Umgebung verbunden ist und durch den Durchgang, der sich durch die Kurbelwelle erstreckt, von dem Kurbelgehäuse getrennt ist.

6. Motor nach Anspruch 5, wobei die Entlüftungsöffnung an der Ventilabdeckung befestigt ist, die die Ventilkammer mit der Umgebung verbindet.

7. Motor nach Anspruch 5,wobei die Entlüftungsöffnung an dem Motorblock befestigt ist und in Verbindung mit dem Nockengehäuse steht.

8. Von einem Bediener getragenes Elektrowerkzeug, das den Motor aus Anspruch 6 umfasst.

9. Von einem Bediener getragenes Elektrowerkzeug nach Anspruch 8, wobei das Elektrowerkzeug aus einem Rasenkantenmäher besteht.

10. Viertaktverbrennungsmotor in Leichtbauweise, der umfasst:
einen Motorblock in Leichtbauweise, der eine Zylinderbohrung ausbildet, und ein geschlossenes Kurbelgehäuse;
einen Kolben, der sich hin- und herbewegend mit der Zylinderbohrung zusammenwirkt;
eine Kolbenstangen-Baugruppe mit einem ersten Lager, das drehgelenkig mit dem Kolben zusammenwirkt, einem gestreckten zentralen Bereich und einem zweiten Lager, das von dem ersten Lager beabstandet ist;
eine Kurbelwelle mit einer gestreckten Achsenwelle, die drehbar in dem Motorblock angebracht ist, und eine in radialer Richtung versetzten Kurbelkröpfung, die mit dem zweiten Lager der Kolbenstange zusammenwirkt;
eine Zylinderkopf Baugruppe, die an dem Motorblock angebracht ist, um in Zusammenwirken mit der Zylinderbohrung und dem Kolben eine Verbrennungskammer auszubilden, wobei die Zylinderkopf-Baugruppe einen obenliegenden Einlasskanal und Auslasskanal, eine Zündkerzenbohrung, die sich in die Verbrennungskammer hinein erstreckt, und ein Einlassventil, ein Auslassventil und eine Zündkerze hat, die jeweils mit dem Einlasskanal und dem Auslasskanal und der Zündkerzenbohrung zusammenwirken;
eine Ventilabdeckung, die an dem Zylinderkopf angebracht ist, um eine Ventilkammer auszubilden; und
eine Nockenwelle mit Nocken für aufeinanderfolgendes Aktivieren des Einlassund Auslassventils, einer Nockenwellen-Antriebsvorrichtung, die die Kurbelwelle und die Nockenwelle antreibbar verbindet, um die Nockenwelle bei halber Motordrehzahl anzutreiben, wobei die Nockenwelle einen axialen Durchgang hat, der sich durch dieselbe erstreckt und wenigstens einen drehenden radialen Kanal aufweist;
wobei der radiale Kanal des axialen Durchganges der Nockenwelle in Verbindung mit dem Kurbelgehäuse steht und wobei der axiale Durchgang in der Nockenwelle durcheinen Ölnebel-Schmierdurchgang in Verbindung mit der Ventilkammer steht;
wobei der Ölnebel-Schmierdurchgang wenigstens teilweise durch ein externes Rohr ausgebildet wird, das sich von der Ventilkammer zu einem Bereich des Motorblockes unmittelbar angrenzend an den in der Nockenwelle ausgebildeten axialen Durchgang erstreckt;
wobei die Luft, die das Kurbelgehäuse teilweise ausfüllt, ungehindert durch die sich drehende Nockenwelle hindurchgehen kann, da große Öltropfen aufgrund der Zentrifugalkraft der sich drehenden Nockenwelle daran gehindert werden, durch den axialen Durchgang in der Nockenwelle hindurchzugehen, wodurch ein Motor entsteht, der in mehreren Ausrichtungen betrieben werden kann.

11. Motor nachAnspruch10, wobei der Motorblock mit einem Ölrücklaufkanal versehen ist, der sich zwischen dem Nockengehäuse und dem Kurbelgehäuse erstreckt, so dass sich in der Ventilkammer und dem Nockengehäuse bildendes Ölkondensat über Schwerkraft zu dem Kurbelgehäuse zurücklaufen kann, wenn der Motor in einer normalen, im allgemeinen vertikalen, Position betrieben wird.

12. Von einem Bediener getragenes Elektrowerkzeug, das den Motor aus Anspruch 10 umfasst.

13. Von einem Bediener getragenes Elektrowerkzeug nach Anspruch 12, wobei das Elektrowerkzeug aus einem Rasenkantenmäher besteht.

## Revendications

1. Moteur à combustion interne à quatre temps léger, comprenant :
un bloc-moteur léger comportant un alésage de cylindre, un carter de vilebrequin enfermé en communication avec l'alésage de cylindre, un carter de cames enfermé et un tourillon de palier s'étendant entre le carter de vilebrequin et le carter de cames,
un piston coopérant avec un mouvement alternatif à l'intérieur d'un alésage de cylindre,
un ensemble de bielle de liaison comportant un premier palier destiné à coopérer avec possibilité de pivotement avec le piston, une région centrale allongée et un second palier espacé du premier palier,
un ensemble de culasse fixé au bloc-moteur pour définir une chambre de combustion en coopération avec l'alésage de cylindre et le piston, ledit ensemble de culasse comportant des orifices d'admission et d'échappement en tête, un trou pour bougie d'allumage s'étendant dans la chambre de combustion et une soupape d'admission, une soupape d'échappement et une bougie d'allumage coopérant respectivement avec les orifices d'admission et d'échappement et le trou de bougie d'allumage,
un arbre à cames entraîné par le vilebrequin à demi-régime du moteur afin d'activer séquentiellement les soupapes d'admission et d'échappement,
un cache-soupapes fixé à la culasse pour définir une chambre de soupapes,
un vilebrequin comportant une broche de vilebrequin coopérant avec le second palier de la bielle de liaison, un arbre axial allongé monté avec possibilité de pivotement sur le tourillon du palier du bloc-moteur et muni d'une extrémité entraînée, d'une extrémité de sortie, d'un passage axial interne comportant deux orifices d'entrée/sortie axiaux séparés, un maneton-masse d'équilibrage coopérant avec la broche de vilebrequin et l'arbre axial, maintenant la broche de vilebrequin et l'arbre axial dans une relation parallèle écartée, le maneton-masse d'équilibrage comportant un passage interne prolongé radialement ayant une première extrémité en communication avec l'un des orifices d'entrée/sortie de l'arbre axial et une seconde extrémité en communication avec le carter de vilebrequin, l'autre des orifices d'entrée/sortie de l'arbre axial étant en communication avec le carter de cames afin d'interconnecter ainsi le carter de cames et le carter de vilebrequin,
dans lequel un brouillard d'huile formé par l'huile de lubrification, qui remplit partiellement le carter de vilebrequin, est libre de passer au travers du passage dans l'arbre de vilebrequin pendant le fonctionnement du moteur, et
dans lequel les grandes gouttelettes d'huile et l'huile liquide sont empêchées de pénétrer dans le passage radial en rotation dans le maneton-masse d'équilibrage de l'arbre de vilebrequin en raison de la force centrifuge du passage en rotation, en permettant ainsi que le moteur puisse être mis en oeuvre dans un certain nombre d'orientations.

2. Moteur selon la revendication 1, dans lequel le vilebrequin est d'une forme générale en U comportant deux parties d'arbre axial séparées alignées coaxialement et deux parties de maneton-masse d'équilibrage interconnectées par la broche de vilebrequin, l'une des parties d'arbre axial et la partie de maneton-masse d'équilibrage associée ayant un passage interne formé dans celle-ci.

3. Moteur selon la revendication 2, comprenant en outre un passage de lubrifiant sous forme de brouillard s'étendant entre le carter de cames et le cache-soupapes qui est au moins partiellement formé par le bloc-moteur.

4. Moteur selon la revendication 3, dans lequel ledit bloc-moteur est muni d'un orifice de retour d'huile s'étendant entre le carter de cames et le carter de vilebrequin pour permettre à un condensat d'huile se formant dans la chambre de soupapes et le carter de cames de revenir dans le carter de vilebrequin par gravité lorsque le moteur est mis en oeuvre dans une position normale globalement verticale, l'orifice de retour d'huile étant sensiblement plus grand et de surface efficace plus grande que le passage s'étendant dans l'arbre de vilebrequin.

5. Moteur selon la revendication 4, comprenant en outre un évent de reniflard relié à l'atmosphère qui est isolé du vilebrequin par le passage s'étendant au travers du vilebrequin.

6. Moteur selon la revendication 5, dans lequel l'évent de reniflard est fixé au cache-soupapes en interconnectant la chambre de soupapes avec l'atmosphère.

7. Moteur selon la revendication 5, dans lequel l'évent de reniflard est fixé au bloc-moteur et en communication avec le carter de cames.

8. Outil motorisé porté par un opérateur comprenant le moteur selon la revendication 6.

9. Outil motorisé porté par un opérateur selon la revendication 8, dans lequel l'outil motorisé consiste en un coupe-bordure.

10. Moteur à combustion interne à quatre temps léger, comprenant :
un bloc-moteur léger comportant un alésage de cylindre et un vilebrequin enfermé,
un piston coopérant par mouvement alternatif à l'intérieur d'un alésage de cylindre,
un ensemble de bielle de liaison comportant un premier palier coopérant en pivotement avec le piston, une région centrale allongée ainsi qu'un second palier espacé du premier palier,
un vilebrequin comportant un arbre axial allongé, monté avec possibilité de rotation dans le bloc-moteur et une broche de vilebrequin décalée radialement en coopération avec le second palier de la bielle de liaison,
un ensemble de culasse fixé au bloc-moteur pour définir une chambre de combustion en coopération avec l'alésage de cylindre et le piston, ledit ensemble de culasse comportant des orifices d'admission et d'échappement en tête, un trou pour bougie d'allumage s'étendant jusque dans la chambre de combustion et une soupape d'admission, une soupape d'échappement et une bougie d'allumage coopérant respectivement avec les orifices d'admission et d'échappement et le trou de bougie d'allumage,
un cache-soupapes fixé à la culasse pour définir une chambre de soupapes, et
un arbre à cames comprenant des cames destinées à activer séquentiellement les soupapes d'admission et d'échappement, un moyen d'entraînement d'arbre à cames reliant avec possibilité d'entraînement ledit vilebrequin et ledit arbre à cames afin d'entraîner ledit arbre à cames à demi régime du moteur, l'arbre à cames comportant un passage axial s'étendant au travers de celui-ci, muni d'au moins un orifice radial rotatif,
dans lequel ledit orifice radial du passage axial d'arbre à cames est en communication avec le vilebrequin et le passage axial dans l'arbre à cames est en communication avec la chambre de soupape par l'intermédiaire d'un passage de lubrification par brouillard,
dans lequel le passage de lubrification par brouillard est formé au moins en partie d'un tube externe s'étendant depuis la chambre de soupapes jusqu'à une région du bloc-moteur immédiatement adjacente au passage axial formé dans le vilebrequin,
dans lequel l'air qui remplit partiellement le vilebrequin est libre de passer au travers de l'arbre à cames en rotation alors que de grandes gouttelettes d'huile sont empêchées de passer au travers du passage axial dans l'arbre à cames en raison de la force centrifuge de l'arbre à cames en rotation, ce qui résulte en un moteur qui peut être mis en oeuvre suivant un certain nombre d'orientations.

11. Moteur selon la revendication 10, dans lequel ledit bloc-moteur est muni d'un orifice de retour d'huile s'étendant entre le carter de cames et le carter de vilebrequin pour permettre à un condensat d'huile se formant dans la chambre de soupapes et le carter de cames de revenir dans le carter de vilebrequin par gravité lorsque le moteur est mis en oeuvre dans une position normale globalement verticale.

12. Outil motorisé porté par un opérateur, comprenant le moteur selon la revendication 10.

13. Outil motorisé porté par un opérateur selon la revendication 12, dans lequel l'outil motorisé consiste en un coupe-bordure.
